# EUROPEAN PATENT SPECIFICATION

(11) **EP 3 849 950 B1**
(45) Date of publication and mention of the grant of the patent: **03.08.2022**
(21) Application number: 19773577.2
(22) Date of filing: 13.09.2019
(51) Int. Cl.: G21F 9/12, G21F 9/16, G21F 9/30, B09B 3/25, B09B 3/40, C04B 28/00

(54) **USE OF ADDITIVES FOR VITRIFICATION OF LIQUID RADIOACTIVE CESIUM RADIONUCLIDES-CONTAINING WASTES HAVING HIGH RETENTION EFFICIENCY OF SAID RADIONUCLIDES OVER THE ENTIRE RANGE OF VITRIFICATION TEMPERATURE**
VERWENDUNG VON ADDITIVEN ZUR VERGLASUNG FLÜSSIGER RADIOAKTIVER CÄSIUMRADIONUKLID-HALTIGER ABFÄLLE MIT HOHER RETENTIONSWIRKSAMKEIT DER RADIONUKLIDE ÜBER DEN GESAMTEN BEREICH DER VERGLASUNGSTEMPERATUR
UTILISATION D'ADDITIFS POUR LA VITRIFICATION DE DÉCHETS CONTENANT DES RADIONUCLÉIDES DE CÉSIUM RADIOACTIF LIQUIDE AYANT UNE EFFICACITÉ DE RÉTENTION ÉLEVÉE DESDITS RADIONUCLÉIDES SUR TOUTE LA PLAGE DE TEMPÉRATURE DE VITRIFICATION

(30) Priority: 14.09.2018 SK 500432018
(43) Date of publication of application: 21.07.2021
(73) Proprietor: Vuje, A.S., 918 64 Trnava (SK)
(72) Inventor: LICHVÁR, Peter, 911 01 Trencin (SK)
(74) Representative: Zakova, Anna
(86) International application number: PCT/SK2019/050011
(87) International publication number: WO 2020/055337

(56) References cited:
- EP-A1- 0 180 308
- WO-A2-2008/113609
- CN-A- 106 915 923
- CN-B- 104 292 892
- CZ-B6- 278 833
- JP-A- 2014 032 031
- US-A- 4 642 137

## Description

### TECHNICAL FIELD

The present invention relates to the use of additives based on metakaolin and at least one of anhydrous sodium silicate or anhydrous potassium silicate which are added to a glass matrix intended for the process of vitrification of cesium radionuclides-containing liquid radioactive wastes.

### BACKGROUND OF THE INVENTION

Vitrification is one of the methods of treatment of the radioactive waste. It is a process by which radioactive material is converted into a glass state in which it is harmless to the environment. This method of radioactive material disposal has been used for over 40 years in France, the Russian Federation, the United Kingdom, Japan and the USA (Dennis F. Bickford, T. Eicher, J. Means, J.M. Perez, M.J. Plodinec, J.W. Shade, B. Spalding , L. Staley, L.E. Thompson: Vitrification Technologies for Hazardous and Radioactive Waste Treatment, U.S. Environmental Protection Agency, Office of Research and Development, Center for Environmental Research Information, Cincinnati, OH 45268, United States Environmental Protection Agency, Office of Research and Development Washington, DC 20460, EPA/625/R-92/002 May 1992).

The vitrification process produces a material that has high chemical resistance to water and remains "unchanged" even when exposed to a corrosive environment, especially water, for thousands to millions of years. This ultimately ensures the stability and retention of the radioactive elements in the glass matrix. For example, several types of 'natural' glass have been found, such as obsidians (volcanic glass), but also moldavites from central Europe and ultimately microtectites from the Indian Ocean floor, which showed small surface changes and only a few tenths of a millimeter of glass surface were disturbed, although they have been stored in the natural environment for some 300 million years (M.I. Ojovan, W.E. Lee. An Introduction to Nuclear Waste Immobilization, Elsevier Science, September 19, 2005). Preparation of glasses with the appropriate chemical composition, such as moldavites or obsidians, however requires the use of a high temperature melting of mixtures with a content of radioactive material above 1400°C. Such high temperatures are counterproductive to use in melting technology because some of the radionuclides volatilize from the melting mixture and create a number of subsequent wastes that need to be reprocessed, for example by a new immobilisation process.

One of the most problematic radionuclides ever in terms of its immobilisation by the vitrification process is the ¹³⁷Cs radionuclide. This is mainly due to its volatility. Although most of ¹³⁷Cs radionuclides remain in the melt during the vitrification process, even a small amount that escapes from the melt is a problem due to the increase in activity at the output of the vitrification process. As a consequence of the above, we will mainly deal with the ¹³⁷Cs radionuclide as a preferred radionuclide. It will be apparent to those skilled in the art that the knowledge obtained for the ¹³⁷Cs radionuclide will analogously be applicable to other radionuclides.

M. I. Ojovan, W. E. Lee. An introduction to Nuclear Waste Immobilization, Elsevier Science, September 19, 2005, states that cesium is among the elements with the highest degree of evaporation. This is due to the properties of cesium and its compounds, which have low melting temperatures and a strong tendency to escape from the mixture of glass and radioactive material during its thermal treatment. According to the authors, cesium does not escape from the thermal treated mixture up to about 400°C, and effective suppression of cesium volatilization from the resulting melt can be achieved by adding boron and titanium oxides to said mixture. As a result of the evaporation of the radioactive cesium from the melting medium, the activity of ¹³⁷Cs radionuclide in the gas phase, in the so-called off-gas in the process of its purification most often with water aqueous solution, in the form of a shower, increases. The amount of captured radionuclides (¹³⁷Cs) in the system determines the efficiency of the radioactive waste vitrification, because for technological reasons, after reaching a certain volume activity of the solution, it has to be reprocessed by some immobilisation process. A number of re-immobilisation cycles can significantly reduce the efficiency of the radioactive waste vitrification up to the intolerable state of high energy and hence financial demands to such an extent that the technology is unable to work effectively for these reasons. For this reason, the evaporation of ¹³⁷Cs radionuclides in the vitrification process should be minimized.

Processing of radioactive wastes (e.g. primary, secondary) with immobilisation of radioactive ¹³⁷Cs and its compounds, is therefore one of the most important problems, which employs research teams worldwide. Research in the field of the immobilisation of cesium isotopes-containing radioactive wastes, in particular ¹³⁷Cs radionuclides, has resulted in the use of glass matrices with different chemical compositions. In these matrices the radioactive waste is transformed into oxides which dissolve in the melt and which, upon cooling, form a homogeneous glass phase with a new chemical composition compared to the chemical composition of the matrix used to immobilise the radioactive waste. The result of the research of the chemical composition of the glass has led in particular to glasses based on borosilicate and phosphate compositions.

The borosilicate glasses are the first glass in terms of "starting material" most used in the world to immobilise radioactive waste. The glasses are flexible enough in terms of the number and types of elements they can absorb into the glass matrix, while the glass retains chemical resistance, mechanical integrity, and excellent thermal and radiation stability (M.I. Ojovan O.G Batyukhna: Glasses for Nuclear Waste Immobilization. WM'07 Conference February 25 -March 1, 2007, Tucson, AZ).

However, despite some progress in research into the chemical composition of glass in order to suppress the evaporation of ¹³⁷Cs radionuclides in the vitrification process, the problem is not yet satisfactorily solved (M. Osamu: Efforts for Restoration at Fukushima Dai-ichi Nuclear Power Plants. Meeting on Decommissioning and Remediation after and Nuclear Accident, Vienna, Austria, January 28-February 1, 2013). For these reasons, both the new chemical compositions of base matrices, and the new melting process technologies, are still being sought worldwide.

The aim of the effort is to prepare the glass phase - a matrix containing radionuclides with corresponding properties suitable for safe underground storage. Recently, the solution of the problem regarding the ¹³⁷Cs radionuclide evaporation has been increasingly urgent due to the accident at the Japanese Fukushima Dai-ichi nuclear power plant, which has generated a large amount of secondary radioactive wastes. For example, thousands of tons of ocean water were used to cool the cracked reactor vessel, which had to be deactivated for safety reasons.

One of the materials used to deactivate radioactive water was, for example, inorganic zeoliteherschelite, in which radionuclides, in particular ¹³⁷Cs radionuclides, were largely captured (M. Osamu: Effects for Restoration at Fukushima Dai-ichi Nuclear Power Plants. Meeting on Decommissioning and Remediation after a Nuclear Accident, Vienna, Austria, January 28-February 1, 2013; I. Yamagishi:.Safe Storage of Zeolite Adsorbents used for Treatment of Accident-generated Water at Fukushima Dai-ichi Power Station. IAEA International Expert's Meeting on Decommissioning and Remediation after Nuclear Accident Vienna, Austria 28 Jan-1 Feb 2013). However, capturing ¹³⁷Cs radionuclides in the inorganic zeolite matrix is not a definitive solution as it does not represent a long-term (for thousands of years) safe way to immobilise radioactive waste.

Radioactive water purification was also carried out by Toshiba technology under the name SARRY, using inorganic substances called zeolite IE-96 or IE-911, which is a crystalline substance consisting of SiO₂ and TiO₂. (Isao YAMAGISHI. Basic researches on treatment and disposal of radioactive waste. Characterization and safe storage of spent zeolite produced by treatment of contaminated water. International Symposium on the Decommissioning of TEPCO's Fukushima Dai-ichi Nuclear Power Plant Unit 1-4). Even in this case, the resulting matrices are not considered a long-term safe form of immobilisation of radionuclides for thousands of years.

Therefore, it seems that the only reliable method to immobilise radionuclides, is to immobilise them into a glass or glass-crystalline matrix, by a vitrification process. This immobilisation process is always used when it is necessary to ensure consistent immobilisation of radionuclides in a matrix, which must be sufficiently resistant to the action of e.g. water in permanent storage areas. Vitrification also results in a significant reduction in the volume of radioactive waste. Last but not least, vitrification is essential for safe handling of radioactive waste.

EP 2 977 991 describes the immobilisation of various types of ¹³⁷Cs radionuclide-containing radioactive waste, for example zeolites, into various types of glass matrices. However, this document does not address the retention efficacy of ¹³⁷Cs radionuclides in the melting medium environment, which seriously undermines the economic efficiency of the technology used.

EP 0 180 308 describes the use of borosilicate zeolites for extraction of hazardous cations, especially radioactive cesium and strontium, from radioactive waste solutions and for isolation of these cation-loaded zeolites in glass at lower and therefore safer temperatures than previous practice.

The importance of solving the immobilisation of ¹³⁷Cs radionuclides in the vitrification process is also evidenced by the fact that there are various solutions to immobilisation of zeolites which arose after purification radioactive ocean water in which ¹³⁷Cs radionuclides were captured. In M. Akiyama; N. Sato; A. Kirishima; Y. Inagaki; T. Arima. Properties of Glass formed by Vitrification of Radioactive Cs sorbed Zeolite and its Cs Evaporation Behavior. 12th Pacific Rim Conference on Ceramic and Glass Technology (PACRIM 12), including Glass & Optical Materials Division Meeting (GOMD 2017), reports that the ¹³⁷Cs radionuclide retention was more than 90% of the total ¹³⁷Cs content. Y. Inagaki; T. Arima; K. Idemitsu; D. Akiyama; N. Sato; A. Kirishima. Optimum Conditions for Vitrification of Cs-sorbed Zeolite Waste Generated from Decontamination of Effluents at Fukushima Dai-ichi NPP.12th Pacific Rim Conference on Ceramic and Glass Technology (PACRIM 12), including Glass & Optical Materials Division Meeting (GOMD 2017) it is reported that the ¹³⁷Cs radionuclide retention was 95-100%. Such efficiency is absolute, which does not correspond to the real value obtained from any vitrification process.

In these documents as well as in J. Clarke; M.C. Stennett; C. L. Corkhill; R.J. Hand; N. C. Hyatt. Vitrification of Clinoptilolite using Low Melting Glass Formulations. The 12th Pacific Rim Conference on Ceramic and Glass Technology (PACRIM 12), including the Glass & Optical Materials Division Meeting (GOMD 2017), the efforts of the authors to reduce the melting temperature of the mixture, to the extent possible, to reduce evaporation of ¹³⁷Cs radionuclides are described. However, the effort to lower the melting temperature is greatly limited by the value of the water resistance of the resulting glass.

The chemical resistance of glass in general is the ability of glass to resist to the physico-chemical conditions of the ambient environment. It means, more precisely, the interaction of glass with for example water solutions with different amount and with different chemical compositions of salts in water at different temperatures, and may be pressure too, in its long - term storage. In terms of glass properties: The value of chemical resistance of the glass and hence its suitability for mentioned use dependence, for example, on the chemical composition of the glass, and the glass finish surface quality. As a result of interaction with chemical substances, in the place of its storage, the individual elements are released. Of course, from the radioactive glasses radionuklides are released, which may cause a problem for the environment. The chemical resistance value in general decreases as the melting temperature decreases, and therefore it is not possible to change the chemical composition regardless of this feature. The value of this chemical resistance is the subject to the further world research. Whether it is sufficient for the long-term storage of glass matrices in a deep geological repository is determined by national legislation.

Another promising method, which is from a chemical-technological point of view not widespread yet, is the ¹³⁷Cs ion immobilisation method, which utilizes the interaction of ¹³⁷Cs ions with metakaolin dissolved in an alkaline environment such as aqueous solutions of sodium and/or potassium silicate water glasses enriched for example with NaOH and KOH, respectively. In the dissolution process, the formation of polycondensation reactions, by linking tetrahedral units, resulting in a predominantly amorphous 3D network in which alkaline ions, and thus ¹³⁷Cs, play a role as a charge balance of [AlO_{4/2}]⁻ ions, has been observed. These reactions have exothermic character, but the temperature does not exceed 100°C due to the presence of water. For this reason, this process is also called "cold" immobilisation, and this process has been called geopolymerization (E. Hermann, C. Kunze, R. Gatzweiler, G. Kießig, J. Davidovits Solidification of various radioactive residues by Géopolymers^{®} with special emphasis on Long-Term-Stability Part I: Laboratory investigations Part II: Pilot-scale experiment). Prof. J. Davidovits used this chemical term for the reaction of inorganic thermally activated aluminosilicates with aqueous alkali metal silicate solutions.

In document W. Gong W. Lutze, IL. Pegg. DuraLith Alkali-Aluminosilicate Geopolymer Waste Testing for Hanford secondary Waste. May 2011 VSL-10R2140-1 PNNL-20565 the process of immobilisation of radioactive waste containing ¹³⁷Cs radionuclides in various kinds of so-called geopolymer matrices, including a metakaolin-based geopolymer matrix is described. The authors used this matrix for immobilisation of secondary radioactive waste generated at the Hanford nuclear power plant.

In document Jonathan L. Bell, Patrick E. Driemeyer, and Waltraud M. Kriven Formation of Ceramics from Metakaolin-Based Geopolymers: Part I-Cs-Based Geopolymer the properties of a geopolymer matrix based on metakaolin and cesium hydroxide after high temperature treatment are described. The authors found that nucleation nuclei of the crystalline phase of pollucite (Cs₂O.Al₂O₃.4SiO₂) are already formed in the amorphous structure of the geopolymer of this composition already at 50 °C and for 24 hours. They also found, that at a temperature above 900 °C the geopolymer crystallized to form pollucite.. The chemical resistance of this compound to water is sufficiently high to make this matrix ideal for safe storage in a deep storage if prepared with a ¹³⁷Cs radionuclide. However, said geopolymer matrix was prepared only with an non-radioactive cesium nuclide in the form of CsOH. The thermal treatment of the resulting matrix did not prepare the amorphous - glass but crystalline phase. The physico-chemical vitrification process of the present invention has not been used by the authors.

The prior art does not disclose the utilization of cesium radionuclide retention by a polycondensation reaction into the three-dimensional structure of amorphous aluminium silicate tetrahedral network of geopolymers, over the entire range of thermal treatment of created geopolymer matrix, with content of radioactive waste comprising cesium radionuclides, in the cesium radionuclide vitrification process, it means from room temperature to the melting temperature of the mixture intended to be vitrified and subsequent cooling to the glass phase.

The aim of the present invention is to overcome the aforementioned drawbacks of known solutions regarding the treatment of the cesium radionuclide-containing liquid radioactive waste, in particular ¹³⁷Cs radionuclide, and to provide a solution that minimizes evaporation of these radionuclides throughout the whole temperature range of the vitrification process.

### SUMMARY OF THE INVENTION

The objective of the invention is achieved by the use of additives based on metakaolin and at least one of anhydrous sodium silicate or anhydrous potassium silicate, which are during the vitrification of liquid radioactive waste containing cesium radionuclides, preferably ¹³⁷Cs radionuclides, added to the glass frit intended to vitrify the liquid radioactive waste.

The mechanism of action of the additives used according to the present invention is as follows: After mixing the liquid radioactive waste with the additives, the anhydrous sodium silicate or anhydrous potassium silicate begins to dissolve. The reaction is exothermic. In a locally emerging high *pH* environment, dissolution of metakaolin grains is achieved in a relatively short time of a few minutes (sufficient from the point of view of the technological thermal treatment process), particularly at the points of contact thereof with anhydrous sodium silicate and/or anhydrous potassium silicate. From this point the polycondensation reactions start. The final product of the chemical reactions is the formation of a three-dimensional amorphous structure in which, in addition to Na⁺ and K⁺ ions, cesium radionuclides, preferably ¹³⁷Cs⁺ ions, are in position of charge balanced ions of tetrahedrally coordinated negatively charged [AlO_{4/2}]⁻units. By comparison of activity of cesium radionuclides, preferably of ¹³⁷Cs radionuclides, between the inlet and the outlet of the vitrification process it has been found that by this method ¹³⁷Cs⁺ ions are effectively immobilised in an amorphous three-dimensional structure. It has also been found that said radionuclides are immobilised over the entire temperature range of the vitrification process, it means from room temperature to the melting temperature of a mixture intended for the vitrification of radioactive waste. By this way, the evaporation of the ¹³⁷Cs radionuclides from the mixture intended for the vitrification of radioactive waste over the entire temperature range of the vitrification process is minimalized and the content of retained/trapped ¹³⁷Cs radionuclide in the resulting vitrification process product is maximal. The resulting product of the vitrification process is glass without presence of the signs of crystallization phase.

The reaction is highly effective, if the cesium hydroxide is the source of the ¹³⁷Cs ions. Additives based on metakaolin and anhydrous sodium and/or potassium silicate contain grains of the individual ingredients of the mixture with micron to submicron size, in the frequency range for the selected particle size for metakaolin D₁₀ = 1 µm, D₅₀ = 3 µm and D₉₀ = 10 µm. Anhydrous (sodium or potassium) silicate is characterised with a number of particle sizes defined as follows: (50 - 90) % of the particles are less than 100 µm and 35 % of the particles are in the 100-200 µm range, wherein the grains are in a close contact. The close contact of the grains has been achieved by intensive grinding with simultaneous effect of mixing in an environment with an equal volume of grinding balls made of sintered Al₂O₃ and the above mentioned ingredients. In the mechanical grinding process, porous metakaolin microparticles with a specific surface area about 13 m²/g are filled with anhydrous silicate/s microparticles. The process thus produces a sufficiently homogeneous mixture of the individual ingredients for technological use. This mixture is at the micro grain size level.

Preferably, an inorganic hydrophilic material, preferably E glass hollow glass microspheres, more preferably thermally activated E glass hollow glass microspheres, are further added into the homogeneous powder mixture of metakaolin and anhydrous sodium and/or potassium silicate. This mixture is subsequently mechanically mixed in a mixer equipped with a stirrer according to the invention. This process ensures a high porosity and absorbability and highly efficient contact of radioactive aqueous solution containing ¹³⁷Cs ions, in thermal treatment technology, with the reactive ingredient of the mixture of additives, it means with the mixture of metakaolin with anhydrous sodium silicate and/or anhydrous potassium silicate.

Preferably, a fluxing agent of a size ranging from millimeter to several microns is further added to the homogeneous powder mixture of the additives of the invention with inorganic hydrophilic materials. The fluxing agent is preferably PbO-based glass frit. This is the same way mixed in the mixer thoroughly, along with the other ingredients of the mixture, as mentioned above. By adding the fluxing agent, the chemical composition of the melt shall be adjusted to obtain the properties of the melt, suitable for the desired melting temperature with the radioactive waste content.

Thus, additives in the form of a homogeneous powder mixture comprising metakaolin and at least one of anhydrous sodium silicate or anhydrous potassium silicate are used in the present invention, wherein the grains of the mixture ingredients have micron and submicron size and are in the close contact with each other. Preferably, the additives in the form of a homogeneous powder mixture may further comprise an inorganic hydrophilic material also in a powdered form. The inorganic hydrophilic material is preferably E glass hollow glass microspheres, more preferably thermally activated E glass hollow glass microspheres, which also dissolve in an aqueous environment. Optionally, the additives may further include a fluxing agent in addition to the above mentioned ingredients. The fluxing agent is preferably a PbO-based glass frit. Bi₂O₃-based fluxing agent can also be used to lower the melting temperature.

Also described is a method of preparation of a homogeneous powder mixture of additives, the method comprising physical mixing of metakaolin and anhydrous sodium silicate and/or anhydrous potassium silicate, advantageously, co-milling the ingredients to form a homogeneous powder mixture. The result of this co-milling is the mixture with grains of size on the micron to submicron levels, which are in the close contact with each other. As a result of the close contact the rapid dissolution of anhydrous sodium or potassium silicate is achieved, at the border of the liquid radioactive solution phase and solid phase of the mixture.

Preferably, it is further possible to modify the additives in the form of a homogeneous powder mixture by adding water in the quantity corresponding to 5-20 wt. % of the mixture to said mixture. The reaction is characterised by exothermic behaviour. The resulting agglomerated water-glued formations are disintegrated by sieving. Thereafter, this mixture is subsequently thermally activated in two steps. In the first step of thermal exposition, the resulting product is dehydrated by evaporating free water at 90-110°C for 200-300 minutes. In the second step, due to thermal exposition at 510-530° C for 20-35 minutes, some of the hydroxyl groups which create the aqueous phase are removed. A thermally activated polycondensation product - the additives in the form of a dry granulate (friable cubs) is formed by this method. The product is characterised with a bulk density of about 250 - 430 g/dm³. This bulk density is 2.5 to 4.5 times lower, compared to the bulk density of the powder additive mixture, prior to its reaction with water. Created product - dry granulate additives has a low degree of strength and is characterised by a high porosity and also a high water-absorption capacity. The absorption reaches a value of 200-300 wt. % of the product -additives - after the second step of thermal exposition. The absorption was determined as the amount of water that is the matrix capable to absorb into its volume without the residue. Means, none optically apparent amount of water is outside of the solid particles of the additives. It has been found that the temperature and time of exposition of the mixture in which dehydroxylation occurs is sufficient for the intended technological use of the mixture. This process results in thermally activated additives which, upon contact with an aqueous solution of radionuclides, soak up and subsequent reactions sufficiently immobilise cesium radionuclides, especially ¹³⁷Cs radionuclides, in their structure.

Also described are thermally activated dry granulate additives comprising metakaolin, anhydrous sodium silicate and/or anhydrous potassium silicate, preferably further comprising the inorganic hydrophilic materials, preferably E glass hollow microspheres, more preferably thermally activated E glass hollow microspheres, and even further preferably comprising a fluxing agent, which is preferably a PbO-based glass frit, prepared as described above. Said thermally activated dry granulate additive product is characterised by a low degree of strength, high porosity and high absorption for water.

It is also advantageous if the ingredients of the homogeneous powder mixture and the thermally activated polycondensation product in the form of a dry granulate are selected in such mass ratios as to obtain a viscosity at which the melt is discharged from the melt furnace without any technological problems. These technological problems are, for example, interruption of the flowing melt from the furnace due to high viscosity at the outlet temperature., or the formation of crystalline phases due to, for example, the high crystallization rate of the melt. These constituents are simultaneously in such mass ratios so to obtain the final product free of crystalline phases. In a particular preferred embodiment, the metakaolin/anhydrous sodium silicate/anhydrous potassium silicate mass ratios are in the range 0.97-1.19, the metakaolin/E glass hollow microspheres mass ratio is in the range 1.19-1.85 and the metakaolin/ PbO based fluxing agent mass ratio is in the range of 3.08-18.50.

**Table 1: The mass range (in wt. %) of the individual ingredients of the preferred embodiments of the additives.**

| Ingredient of the additives | Metakaolin | Anhydrous sodium silicate /anhydrous potassium silicate | E glass hollow microspheres | Fluxing agent |
|---|---|---|---|---|
| wt. % | 32 - 37 | 31 - 35 | 20 - 27 | 2 - 12 |

The subject of the invention is a use of the additives in the form of the homogeneous powder mixture or thermally activated additives in the form of the dry granulate prepared by the method described herein, the additives comprising metakaolin, anhydrous sodium and/or potassium silicate, further preferably comprising inorganic hydrophilic materials, which are preferably E glass hollow microspheres, even more preferably thermally activated E glass hollow microspheres and optionally a fluxing agent, which is preferably PbO-based glass frit, for immobilisation ¹³⁷Cs and ¹³⁴Cs radionuclides, preferably ¹³⁷Cs radionuclide, to the glass frit over the entire temperature range of the vitrification process of the liquid radioactive waste, i.e. from room temperature to melting temperature of the mixture intended to be vitrified.

A direct consequence and the clear advantage of the use of said additives in the form of a homogeneous powder mixture or as a dry granulate and the echnological process used in their preparation is a significant reduction in the evaporation of cesium radionuclides, particularly ¹³⁷Cs radionuclide.

In the preferred embodiment, the present additives in the form of a homogeneous powder mixture or in the form of a dry granulate preferably comprise metakaolin with a mass ratio SiO₂/Al₂O₃=1.34-1.5, anhydrous sodium silicate with a mass ratio SiO₂/Na₂O=0.98-1, E glass hollow microspheres with a mass ratio of oxides of SiO₂/Al₂O₃=3.62, SiO₂/CaO=2.33, SiO₂/B₂O₃=6.10, and a PbO-based glass frit with a mass ratio of SiO₂/B₂O₃= 0.39 - 1.17 and SiO₂/PbO = 0.14 - 0.17.

**Table 2: The ranges of individual oxides (in wt. %) forming the additives, according to a preferred embodiment of the present invention.**

| **Oxide** | **SiO₂** | **Al₂O₃** | **K₂O** | **Na₂O** | **FeO** | **Fe₂O₃** | **TiO₂** | **CaO** | **MgO** | **B₂O₃** | **P₂O₅** | **PbO** |
|---|---|---|---|---|---|---|---|---|---|---|---|---|
| **wt. %** | 45-47 | 17-19 | 0.20-0.25 | 15-17 | 0.10-0.15 | 0.3-0.5 | 0.5-0.8 | 4-6 | 0.1-0.4 | 2-4 | 0.1-0.3 | 6-8 |

The additives can be used, after appropriate optimization of the chemical composition, for any type of liquid radioactive waste, in particular secondary radioactive waste, which is suitable for heat treatment by the melting process. The results obtained by measuring the retention efficiency of the solution according to the present invention show a radical reduction of evaporation of cesium radionuclides, especially ¹³⁷Cs radionuclide, over the entire temperature range of the thermal treatment of the radioactive waste. One possible explanation for this phenomenon is the fact that ¹³⁷Cs radionuclides are, in 3D amorphous network structure created at room temperature and near the boiling point of water, in position of charged balanced of tetrahedrally coordinated [AlO_{4/2}]⁻ units. One can be supposed that these units do not undergo decomposition in the process of melting the mixture, but subsequently in the process of cooling the 3D amorphous melt of glass, they remain part of the 3D amorphous network. It follows that this 3D amorphous glass network is capable of retaining ¹³⁷Cs radionuclides in its structure over the entire temperature range of the heat treatment of radioactive waste. The above mentioned units are consistent in the process of thermal treatment, regardless of the presence of the networking or other 3D glass network modifying oxides. In the vitrification process of the liquid radioactive waste, the additives of the invention are added to a melting furnace containing the original glass. The mass ratio is 30 - 40 wt. % of the additives to 70-60 wt. % of the original glass. The original glass is in the form of a glass frit having an irregular shape of 2 to 5 mm in size. The melt, continuously flowing out of the furnace, is free of optically registered signs of the presence of crystallization phases, and the resulting product after cooling the melt is glass, which also does not show signs of crystallization phases.

### BRIEF DESCRIPTION OF THE DRAWINGS

Figure 1 shows the dependence of the retention efficiency of the ¹³⁷Cs radionuclide on the melting time at 984°C (designated as melting batch 3 in the figure) and on the melting time at 989°C (designated as melting batch 5 in the figure) with constant amount of the additives and with a total melting time of 350 minutes.
Figure 2 shows the dependence of the retention efficiency of the ¹³⁷Cs radionuclide, on a temperature with a constant amount of the additives and a melting time of 350 minutes.

### EXAMPLES

The following examples serve only to illustrate the invention and are in no way intended to limit the scope of protection of the present invention. All wt. % stated below are based on the weight of the whole additive mixture unless stated otherwise.

### Example 1: Method of preparation of the homogeneous powder mixture I of the additives for use according to the invention

1. Homogenization in a mixer using Al₂O₃ sintered grinding balls of equal volume to the volume of the blended ingredients, produces a homogeneous mixture of metakaolin with anhydrous sodium silicate in the mass ratio of 1.075/1.

### Example 2: Method of the preparation of the homogeneous powder mixture II of the additives for use according to the invention

1. Preparation of a mixture (homogenization in a mixer as in Example 1) of metakaolin with anhydrous potassium silicate in the mass ratio of 1.075/1.
2. Addition of E glass hollow microspheres in a 1.5/1 mass ratio of metakaolin/E glass hollow microspheres.
3. Mixing the raw materials from step 2 in a mixer equipped with a stirrer for 15 minutes.

### Example 3: Method of the preparation of a homogeneous powder mixture III of the additives for use according to the invention

1. Thermal treatment of E glass hollow microspheres at 535°C for 20 minutes in the furnace and their subsequent sieving.
2. Preparation of the mixture (homogenization in a mixer as in Example 1) of metakaolin with a 1/1 mixture of anhydrous sodium silicate with anhydrous potassium silicate. Ratio amount of metakaolin to this mixture is 1.075/1, representing 35.2 wt. % of metakaolin to 32.7 wt. % of anhydrous sodium silicate.
3. Addition of thermal treated E glass hollow microspheres in the amount of 22 wt. % and adding the fluxing agent, which is PbO having grain size on the level of millimeters, into the amount of 10.1 wt. % to the mixture prepared in step 2.
4. Mixing the raw materials (according to Example 2) in a mixer equipped with a stirrer, for 15 minutes.

### Example 4: Method of the preparation of the homogeneous powder mixture IV of the additives for use according to the invention

1. Preparation of the mixture (homogenization in a mixer as in Example 1) of metakaolin with anhydrous sodium silicate in the mass ratio of 1.075/1, representing 35.2 wt. % of metakaolin to 32.7 wt. % of anhydrous sodium silicate.
2. Addition of 22 wt. % of thermal untreated E glass hollow microspheres and the addition of the fluxing agent, which is Bi₂O₃ on the level of micron grain size, in the amount of 10.1 wt. % to the mixture prepared in step 1.
3. Mixing the raw materials from step 2 in a mixer equipped with a stirrer for 30 minutes.

### Example 5: Method of the preparation of dry granulates I of the additives for use according to the invention

1. Preparation of the mixture (homogenization in a mixer as in Example 1) of metakaolin with anhydrous sodium silicate in mass ratio is 1.075/1, representing 35.2 wt. % of metakaolin to 32.7 wt. % of anhydrous sodium silicate.
2. Addition of the thermally untreated E glass hollow microspheres in the amount of 22 wt. % and addition of PbO fluxing agent having a grain size of 2 - 5 mm in the amount of 10.1 wt. % to the mixture prepared in step 1.
3. Mixing the raw materials from step 2 in a mixer equipped with a stirrer for 15 minutes.
4. Adding water, in the amount of 20 wt. %. while constantly stirring the mixture
5. After the addition of water is complete, the mixture prepared in step 4 is homogenized by stirring in a mixer for 2 to 5 minutes.
6. Sieving the homogenized mixture for disintegration and aeration of the mixture
7. Drying the mixture in an oven at 95°C for 240 minutes.
8. The next thermal treatment of the dried mixture from step 7 at 515°C for 35 minutes is followed.
9. Treatment of the prepared additives for technological purposes by cutting into cubs of size app. 1×1×1 cm.

### Example 6: Method of the preparation of dry granulates II of the additives for use according to the invention

1. Preparation of the mixture (homogenization in a mixer as in Example 1) of metakaolin with anhydrous sodium silicate in the mass ratio of 1.075/1 which represents 35.2 wt. % of metakaolin to 32.7 wt. % of anhydrous sodium silicate.
2. Addition of thermally treated E glass hollow microspheres in the amount of 22 wt. %.
3. Mixing the raw materials from step 2 in a mixer equipped with a stirrer for 15 minutes.
4. Adding water in the amount of 5 wt. % while constantly stirring the mixture, prepared in step 3.
5. After the addition of water is complete, the mixture, prepared in step 4, is homogenized by stirring in a mixer for 2 to 5 minutes.
6. Sieving the homogenized mixture for disintegration and aeration of the mixture.
7. Drying the mixture in an oven at 95 C for 240 minutes.
8. The next thermal treatment of the dried mixture from step 7 at 515°C for 35 minutes is followed.
9. Treatment of the prepared additives for technological purposes by cutting into cubs of size app. 1×1×1 cm.

### Example 7: Chemical composition of the additives according to the most preferably embodiment of the invention is introduced in table 3

**Table 3.Chemical composition of the additives**

| Oxide | Amount of the oxide in the additives / wt. %. |
|---|---|
| SiO₂ | 46.98 |
| Al₂O₃ | 18.54 |
| K₂O | 0.21 |
| Na₂O | 16.65 |
| FeO | 0.13 |
| Fe₂O₃ | 0.41 |
| TiO₂ | 0.72 |
| CaO | 5.11 |
| MgO | 0.33 |
| B₂O₃ | 3.07 |
| P₂O₅ | 0.02 |
| PbO | 7.83 |

### Example 8: Vitrification of the liquid radioactive waste containing ¹³⁷Cs radionuclide

In order to immobilise the liquid radioactive waste under the name Chrompik III the vitrification process was used. Chrompik III is liquid medium containing ¹³⁷Cs radionuclides, with relatively high-activity on the level of 100 GBq/dm³. The thermally treated Chrompik III is an aqueous solution containing approximately 1.5 wt. % of dissolved salts, especially K₂CrO₄, K₂CO₃ and KHCO₃. The following radionuclides were identified in Chrompik III solution: ¹³⁷Cs with an activity of approximately 1×10¹¹ Bq/dm³ as well as transuraniums ^{238,239,240}Pu, ²⁴¹Am with activity of approximately 5.97×10⁵ and 1.87×10⁶ Bq/dm³respectively.

The technological process for immobilisation of Chrompik III in the vitrification process comprises mixing Chrompik III with any of the additives prepared according to Examples 1-7, and with the original glass frit inside the melting furnace. At this stage of the process, the aqueous solution of Chrompik III is absorbed into the porous mass of the additives. The gradual dissolution of anhydrous sodium silicate creates an alkaline aqueous environment and, as mentioned above, polycondensation reactions start. The result is a geopolymer composition in which ¹³⁷Cs radionuclides are immobilised. The entire mixture is then dehydrated thermally by medium-frequency induction heating at a temperature of up to 110 ° C. In the next thermal treatment step, the mixture is kept constant at 650°C for 1 hour. At the end of this process is the mixture sufficiently dehydroxylated. The next step is the thermal treatment of the mixture at 800°C and maintaining this temperature for 1 hour. As a result of this process, a CO₂ is created and at the same time, a significant part of CO₂ leaks from the mixture due to decomposition of Chrompik III (K₂CO₃) salt. The role of CO₂ is very important from a technological point of view, because it ensures the chemical homogenization of the mixture in the absence of mixing equipment. The resulting melt is thus effectively stirred at a temperature of 984-1010°C. Viscosity of the melt is in the range of approximately 3.3 dPas - 2.7 dPas. In this way and at the same time, gasses are rapidly released gasses from the melt (CO₂ escapes) and the melt is in the process of refining for 1-1.5 hours. After this time, the melt is discharged into a stainless steel vessel where the formation of the homogeneous glass phase is observed optically. The parameters of melting process make it possible to discharge the melt without any technological problems into a cartridge intended for the next technological phase for glass storage. The mixture intended to be vitrified, which is placed in the furnace, contains about 42 wt. % of aqueous Chrompik III solution having a volume activity of about 5.58×10¹¹ Bq/dm³, total activity of about 2.79×10¹² Bq, and about 58 wt. % of mixture containing 30 wt. %, by weight of that mixture, of the additives having composition as set forth in Example 7 and 70 wt. %, by weight of that mixture, of the original glass frit with a grain size of 2 - 5 mm.

The resulting glass matrix of non-radioactive model chemical composition of Chrompik III belongs, according to CSN ISO 719700531, into to the second class of durability.

### Example 9: Determination of efficiency of the additives for immobilisation of ¹³⁷Cs radionuclide in the vitrification process

At the beginning of the assessment of the used additives according to the present invention efficiency, at first it is necessary to define the technological equipments, which are most relevant for evaluating the efficiency of ¹³⁷Cs radionuclide retention. The first substantial technological input equipment is the furnace, the other is the condenser of evaporated water from the furnace, the third is the cooler of rest evaporated water, and finally there is the water shower for outlet off-gas.

The ¹³⁷Cs radionuclide retention efficiency of the additives in the ¹³⁷Cs radionuclide immobilisation in the vitrification process was calculated as ratio of the difference between the input activity of the liquid radioactive waste in furnace and the total radioactive waste activity detected in the three other technology equipments, it means condenser, cooler and shower equipment, to the input activity in furnace, expressed in percentage.

This calculation procedure was performed with activity value obtained only at the end of the melting process, as there is only available one cumulative discrete value of activity in the condenser and in the cooler equipments. The sum of activity in the condenser and cooler was found to be 1×10⁹ Bq.

To calculate the retention efficiency of ¹³⁷Cs radionuclides, the total inlet activity in the furnace at temperature of about 110°C and the total outlet activity measured in the water spray shower in the thermal treatment process, from 350°C to the melting temperature, were used.

At this technological point, activity was measured and efficiency calculated continuously.

For the entry value of volume activity of 5.58×10¹¹ Bq/dm³ and the volume of radioactive solution in the furnace of 5 dm³, the following values for the ¹³⁷Cs radionuclide retention efficiency were calculated: the value of 99.963 % for melting batch number 5 and the value of 99.960 % for melting batch number 3.

It is only obvious, that the activity of radionuclides at the output of technological equipment, equipment in which off-gas is purified with a water spray, is only a part of the activity of the radionuclides released from the vitrification plant in the process of thermal treatment of radioactive waste. The evaporated radionuclides in off-gas, are also captured on the inner walls of the metal pipelines, which connect the vitrification furnace with all main technological equipments used to capture the radionuclides, in our case it is the condenser, the cooler and the water shower. The amount of radionuclides deposited on the inner walls of the pipeline leading from the furnace to the individual technological equipments (and also between them) depends, for example, on the chemical composition of the pipeline, its length and the roughness of the inner surface and also on technological parameters of the vitrification process such as input activity value, temperature and melting time as well as vacuum in the vitrification plant.

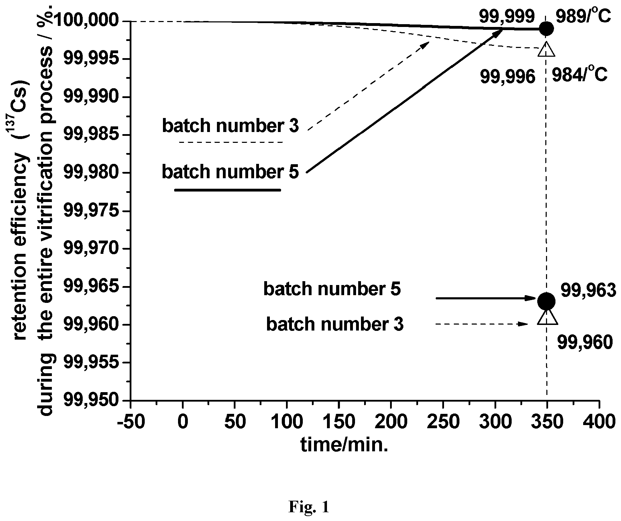

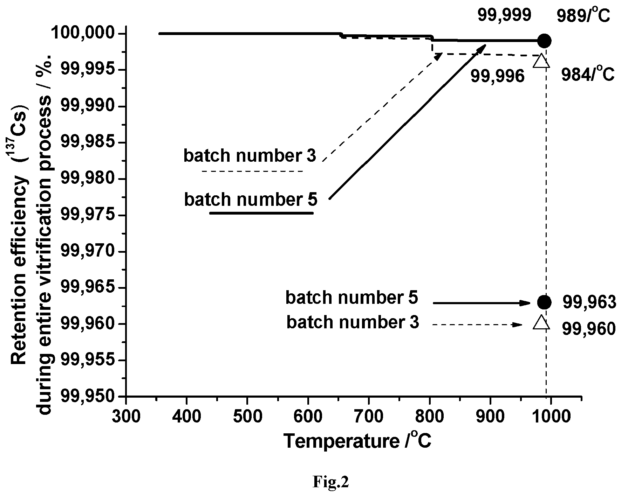

The above mentioned measurements of activity on the internal walls of the metal pipeline in the presented vitrification process have not been made. However, the amount of deposited radionuclides also depends on the number of melting processes carried out on the equipment. It is legitimate to assume, that the value of deposited activity on the inner walls of the pipeline gradually stabilizes with increasing number of melting experiments. The inner surface is saturated with radionuclides and does not change significantly. The ¹³⁷Cs retention efficiency presented here was calculated for batches above 30 in the new melting series. The results of the retention efficiency of ¹³⁷Cs radionuclides in this patent application were calculated provided the 100% saturation of the internal walls of the pipeline. The dependence of the efficiency of the additives on time and temperature are displayed in Fig. 1 and Fig. 2 and represent ¹³⁷Cs radionuclide retention efficiency for shower equipment. At the end of the vitrification process the last activity value measured in the shower equipment was added to the activity values measured in the condenser and cooler. Thus the final efficiency of the vitrification process was obtained on the level of 99.963 % for batch number 5 and 99.960 % for batch number 3.

### INDUSTRIAL APPLICABILITY

The present invention finds application in the treatment of any radioactive waste containing cesium radionuclides, preferably provided that they are converted into liquid phase.

## Claims

1. Use of a mixture of additives comprising metakaolin and at least one of anhydrous sodium silicate or anhydrous potassium silicate, wherein the mixture ingredients are in a close contact and the grains of the mixture ingredients have micron to submicron size, for immobilisation of cesium radionuclides in the process of vitrification of liquid radioactive wastes.

2. Use according to claim 1 wherein the mixture further comprises inorganic hydrophilic materials, preferably E glass hollow microspheres, even more preferably thermally activated E glass hollow microspheres.

3. Use according to claim 2 wherein the mixture further comprises fluxing agent.

4. Use according to claim 3 wherein the fluxing agent is a glass frit based on PbO or Bi₂O₃.

5. Use according to any one of claims 1 to 4 wherein the mixture is in the form of a homogeneous powder mixture or of a dry granulate obtained from the homogeneous powder mixture by adding water in the amount of 5 to 20 % by weight of the mixture, followed by sieving and thermal activation.

6. Use according to claim 5 wherein the thermal activation is carried out by heating mixture to a temperature of 90-110 °C for 200-300 minutes with evaporation of water and subsequent thermal exposure at a temperature of 510-530 °C for 20-35 minutes.

7. Use according to any one of claims 1 to 6 wherein the immobilisation of cesium radionuclides occurs throughout the whole temperature range of the vitrification process.

8. Use according to any one of claims 1 to 7 wherein in the vitrification process a homogeneous glass phase without presence of signs of crystallisation phase is obtained.

9. Use according to any one of claims 1 to 8 wherein the cesium radionuclide is ¹³⁷Cs.

## Patentansprüche

1. Verwendung eines Gemisches von Additiven, das Metakaolin und mindestens eines von wasserfreiem Natriumsilikat oder wasserfreiem Kaliumsilikat umfasst, wobei die Komponenten des Gemisches in engem Kontakt stehen und die Körner der Komponenten des Gemisches eine Mikron- bis Submikrongröße aufweisen, zur Immobilisierung von Cäsiumradionukliden in der Verfahren zur Verglasung flüssiger radioaktiver Abfälle.

2. Verwendung nach Anspruch 1, wobei das Gemisch ferner anorganische hydrophile Materialien, bevorzugt Mikrohohlglaskugeln aus E-Glas, besonders bevorzugt thermisch aktivierte Mikrohohlglaskugeln aus E-Glas, umfasst.

3. Verwendung nach Anspruch 2, wobei das Gemisch ferner einen Schmelzzusatz umfasst.

4. Verwendung nach Anspruch 3, wobei der Schmelzzusatz eine Glasfritte auf PbO- oder Bi₂O₃-Basis ist.

5. Verwendung nach einem der Ansprüche 1 bis 4, wobei das Gemisch in Form einer homogenen Pulvermischung oder eines trockenen Granulats vorliegt, das aus einer homogenen Pulvermischung durch Zugabe von Wasser in einer Menge von 5 bis 20 Gew.-% des Gemisches, deren anschließendes Sieben und eine thermische Aktivierung gebildet wird.

6. Verwendung nach Anspruch 5, wobei die thermische Aktivierung durch Erhitzen des Gemisches auf eine Temperatur von 90-110 °C für 200-300 Minuten durchgeführt wird, während das Wasser verdampft, gefolgt von einer thermischen Exposition bei einer Temperatur von 510-530 °C für 20-35 Minuten.

7. Verwendung nach einem der Ansprüche 1 bis 6, wobei die Immobilisierung von Cäsiumradionukliden über den gesamten Temperaturbereich des Verglasungsprozesses erfolgt.

8. Verwendung nach einem der Ansprüche 1 bis 7, wobei im Verglasungsverfahren eine homogene Glasphase ohne Vorhandensein von Anzeichen einer Kristallisationsphase erhalten wird.

9. Verwendung nach einem der Ansprüche 1 bis 8, wobei das Cäsiumradionuklid ¹³⁷Cs ist.

## Revendications

1. Utilisation d'un mélange d'additifs comprenant du métakaolin et au moins un silicate de sodium anhydre ou un silicate de potassium anhydre, dans lequel les composants du mélange sont en contact étroit et les grains des composants du mélange ont une taille de l'ordre du micron au submicron, afin de retenir des radionucléides de césium lors du processus de vitrification de déchets radioactifs liquides.

2. Utilisation selon la revendication 1, dans laquelle le mélange comporte en outre des matériaux hydrophiles inorganiques, de préférence des microsphères creuses en verre E, préférablement des microsphères creuses en verre E activées thermiquement.

3. Utilisation selon la revendication 2, dans laquelle le mélange comporte en outre un agent fluxant.

4. Utilisation selon la revendication 3, dans laquelle l'agent fluxant est une fritte de verre à base de PbO ou de Bi₂O₃.

5. Utilisation selon l'une quelconque des revendications 1 à 4, dans laquelle le mélange se présente sous la forme d'un mélange de poudre homogène ou d'un granulé sec obtenu à partir du mélange de poudre homogène par ajout d'une quantité d'eau correspondant à 5-20 % en poids du mélange, suivi d'un tamisage et d'une activation thermique.

6. Utilisation selon la revendication 5, dans laquelle l'activation thermique est effectuée en chauffant le mélange à une température de 90-110 °C pendant 200-300 minutes avec évaporation de l'eau et exposition thermique ultérieure à une température de 510-530 °C pendant 20-35 minutes.

7. Utilisation selon l'une quelconque des revendications 1 à 6, dans laquelle la rétention des radionucléides de césium se produit dans toute la gamme de températures du processus de vitrification.

8. Utilisation selon l'une quelconque des revendications 1 à 7, dans laquelle le processus de vitrification produit une phase vitreuse homogène sans présence de signes de phase de cristallisation.

9. Utilisation selon l'une quelconque des revendications 1 à 8, dans laquelle le radionucléide de césium est le ¹³⁷Cs.
